# EUROPÄISCHE PATENTSCHRIFT

(11) **EP 1 275 577 B1**
(45) Veröffentlichungstag und Bekanntmachung des Hinweises auf die Patenterteilung: **31.08.2005**
(21) Anmeldenummer: 02014874.8
(22) Anmeldetag: 04.07.2002
(51) Int. Cl.: B62D 65/00, B62D 29/04

(54) **Modul zum Anbau an eine Fahrzeugkarosserie, insbesondere Dachmodul, sowie Verfahren zum Herstellen und Verfahren zum Befestigen eines Moduls**
Module for attachment to a vehicle body , especially a roof module , and method for its production , and method for the attachment of the module
Module pour la fixation à une carrosserie d'un véhicule automobile, spécialement un module de toit, et procédé de sa fabrication, et procédé de montage du module

(30) Priorität: 12.07.2001 DE 10133894
(43) Veröffentlichungstag der Anmeldung: 15.01.2003
(73) Patentinhaber: ArvinMeritor GmbH, 63128 Dietzenbach (DE)
(72) Erfinder: Zinsmeister, Arnulf, 79674 Todtnau (DE); Hock, Daniel, 63867 Johannesberg (DE)
(74) Vertreter: Kitzhofer, Thomas

(56) Entgegenhaltungen:
- DE-A- 2 128 318
- US-A1- 2001 003 400

## Beschreibung

Die Erfindung betrifft ein Modul zum Anbau an eine Fahrzeugkarosserie und zum Schließen der Außenhaut der Fahrzeugkarosserie, mit wenigstens einem im eingebauten Zustand des Moduls die Außenhaut wenigstens abschnittsweise bildenden Teil aus Metall und einer mit dem Teil verbundenen Kunststoffschicht, mit der das Modul an der Fahrzeugkarosserie anliegt. Insbesondere betrifft die Erfindung ein Dachmodul mit integriertem Dachöffnungssystem.

Die Fahrzeugkarosserie, d.h. das Blechkleid des Fahrzeugs, hat vor dem Bestücken mit Modulen Öffnungen in der Außenhaut, die durch die eingesetzten Module geschlossen werden. Beispiele für solche Module zum Schließen einer Öffnung in der Außenhaut des Fahrzeugs sind bewegliche Module, beispielsweise Türen, Motorhaube, Kofferraumdeckel, und zur Außenhaut feststehende Module, wie Frontendmodule oder, hierauf bezieht sich die vorliegende Erfindung besonders, Dachmodule, insbesondere mit integriertem Dachöffnungssystem. Solche Dachmodule können beispielsweise Schiebe- oder Spoilerdachmodule ebenso wie Faltdachmodule oder Dachmodule mit festem Glasdach sein, also komplette Module, die in eine Öffnung in der Fahrzeugkarosserie eingesetzt werden. Es gibt Varianten von Dachmodulen, bei denen das Dachmodul über die elektrisch isolierende Kunststoffschicht an der Fahrzeugkarosserie anliegt und damit elektrisch gegenüber dem Rest der Karosserie isoliert ist Die Erfindung bezieht sich auf derartig an der Fahrzeugkarosserie gelagerte Module. Oft sind Anbauteile wie z.B. Antennen und dergl. an dem die Außenhaut bildenden Teil optional zu befestigen, bei dem ein Massekontakt vorhanden sein muß. Es sind zwar Lösungen vorhanden, z.B. bei einer Motorhaube eine Masseleitung an das Blech selbst anzuschweißen, anzulöten oder es mit einer Schraube anzubringen, die am Blech der Motorhaube angeschweißt ist. Eine derartige Lösung ist jedoch immer mit dem Nachteil verbunden, daß die Montage oft zeitraubend ist, gegebenenfalls zu einer Verletzung der Außenhaut oder des Lackes kommen kann und die Masseleitung im eingebauten Zustand nicht exakt positioniert ist.

Die Erfindung schafft ein Modul, bei dem das die Außenhaut bildende Teil aus Metall auf einfache Weise mit der Fahrzeugkarosserie kontaktiert werden kann.

Dies wird bei einem Modul der eingangs genannten Art dadurch erreicht, daß ein elektrisch leitendes Kontaktelement mit dem Teil elektrisch leitend verbunden und an der Kunststoffschicht befestigt ist und daß das Kontaktelement einen bezüglich der Kunststoffschicht freiliegenden Abschnitt hat, der der elektrischen Kontaktierung der Fahrzeugkarosserie dient. Beim erfindungsgemäßen Modul wird ein elektrisch leitendes Kontaktelement, das der elektrischen Kontaktierung des Teils dient, an der Kunststoffschicht befestigt und darin eingebettet. In der Kunststoffschicht läßt sich das Kontaktelement sehr leicht, ob durch Kleben, Umschäumen oder Umspritzen, befestigen und positionieren. Dadurch wird die Lage des Kontaktelements einfach festlegbar. Indem die Kunststoffschicht mit dem Teil verbunden ist, läßt sich an oder in der Kunststoffschicht das Kontaktelement bis zum Teil führen, so daß eine Relativbewegung zwischen dem Kontaktelement und dem Teil im Bereich der Kontaktierung von Kontaktelement und Teil ausgeschlossen werden kann, was die Kontaktsicherheit erhöht. Auch Befestigungsmittel wie Schrauben oder dergl. zwischen Teil und Kontaktelement können dadurch sogar entfallen. Darüber hinaus ist das Kontaktelement bezüglich der Kunststoffschicht abschnittsweise freiliegend, so daß mit der Montage des Moduls an der Fahrzeugkarosserie gleichzeitig der Kontakt zwischen dem freiliegenden Abschnitt des Kontaktelements und der Fahrzeugkarosserie erfolgen kann. Zusätzliche, nur für die Kontaktierung verwendete Befestigungen des Kontaktelements an der Fahrzeugkarosserie können gegebenenfalls dadurch vollständig entfallen.

Vorzugsweise ist das Teil ein eine Öffnung in der Außenhaut der Fahrzeugkarosserie schließendes Blech oder ein das Modul tragender Rahmen, so daß das Teil ein tragendes Teil ist.

Wie erwähnt, ist das Modul nach der Erfindung gemäß der bevorzugten Ausführungsform ein Dachmodul mit integriertem Dachöffnungssystem. Ein solches Dachmodul kann beispielsweise das komplette, an dem Rahmen der Fahrzeugkarosserie befestigte Dach oder nur ein Schiebe- oder Spoilerdachmodul sein.

Das Teil ist z.B. ein die der Dachmodulöffnung umgebender Rahmen.

Wenn das Kontaktelement mechanisch nicht lasttragend, z.B. als flexibles Kabel, ausgebildet und/oder nicht mechanisch lasttragend im Modul integriert ist, sind die Belastungen auf das Kontaktelement sehr gering, was die Kontaktsicherheit erhöht.

Als Verbindung zwischen dem Kontaktelement und dem Teil oder der Fahrzeugkarosserie kann bevorzugt eine elektrisch leitende Klebeverbindung vorgesehen sein. Andere Verbindungen, wie Schweißen, Nieten, Crimpen, Clinchen, Vorsehen eines elektrischen Steckkontakts oder Verbinden mittels Schrauben oder Klemmen, sind jedoch auch möglich.

Bei der bevorzugten Ausführungsform ist ein Befestigungsmittel zur Befestigung des Moduls an der Fahrzeugkarosserie vorgesehen. Dieses Befestigungsmittel kann eine Klebeverbindung, eine Nietverbindung, eine Crimp- oder Clinchverbindung, eine Steckverbindung oder eine Verbindung mittels Schrauben oder Klemmen sein.

Wenn das Befestigungsmittel zur Befestigung des Moduls an der Fahrzeugkarosserie gleichzeitig der elektrisch leitenden Befestigung des Kontaktelements an der Fahrzeugkarosserie dient, lassen sich zusätzliche Bauteile sparen. Zudem wird in einem Arbeitsgang, nämlich bei der Befestigung des Moduls an der Fahrzeugkarosserie, gleichzeitig auch die Kontaktierung von Teil und Fahrzeugkarosserie über das Kontaktelement erreicht.

Eines dieser Befestigungsmittel kann eine elektrisch leitende Klebeverbindung sein, mit der das Kontaktelement unmittelbar an der Fahrzeugkarosserie angebracht wird.

Ferner ist vorgesehen, daß das Teil auf seiner Unterseite hinterschäumt ist, um die Kunststoffschicht zu bilden. Durch das Hinterschäumen läßt sich in einem Arbeitsgang auch das Kontaktelement in das Modul integrieren und in die Kunststoffschicht einbetten.

Durch Verwendung eines elektrisch leitenden Kontaktstreifens oder eines Flachbandkabels als Kontaktelement kann eine große Kontaktfläche zum Teil als auch zur Fahrzeugkarosserie bereitgestellt werden.

Wenn das Flachbandkabel auf der Außenseite der Kunststoffschicht, an der es befestigt ist, freiliegt, steht dieser freiliegende, sicher an der Kunststoffschicht gehaltene Abschnitt zur Kontaktierung der Fahrzeugkarosserie zur Verfügung.

Der Vorteil der Verwendung eines Flachbandkabels besteht unter anderem auch darin, daß es einfach an einem Ende mit einem Stecker verbunden sein kann, der zum Anschluß eines am Modul vorgesehenen elektrischen Verbrauchers, z.B. einer Innenraumbeleuchtung oder eines Antriebsmotors, dient.

Durch eine wellen- oder zick-zack-förmige Einbettung des Flachbandkabels in die Kunststoffschicht läßt sich das Flachbandkabel sicher und zugentlastet formschlüssig in die Kunststoffschicht integrieren.

Die Erfindung betrifft darüber hinaus ein Verfahren zum Herstellen eines erfindungsgemäßen Moduls, insbesondere eines Dachmoduls mit integriertem Dachöffnungssystem und hier vorzugsweise die Herstellung eines Schiebe- oder Spoilerdachmoduls. Das erfindungsgemäße Verfahren ist durch folgende Schritte gekennzeichnet:
a) das Teil wird in eine Schaumform eingelegt,
b) das Kontaktelement wird in die Schaumform eingelegt und relativ zum Teil positioniert und
c) das Teil wird so hinterschäumt, daß das Kontaktelement in die entstehende Kunststoffschicht eingebettet ist, wobei das Kontaktelement im hinterschäumten Zustand das Teil kontaktiert.

Durch das erfindungsgemäße Verfahren wird das Kontaktelement sicher in der Kunststoffschicht und damit fest zum Teil positioniert. Ein Ausreißen des Kontaktelements oder Lösen des Kontaktes kann relativ sicher verhindert werden. Darüber hinaus ist für die Befestigung des Kontaktelements an der Kunststoffschicht kein separates Bauteil erforderlich. Die Kontaktierung von Kontaktelement und Teil erfolgt vorzugsweise bereits vor dem Einlegen in die Schaumform.

Bevorzugt wird das elektrische Kontaktelement vor dem Schritt c), gegebenenfalls sogar noch vor dem Schritt a), durch eine elektrisch leitende Klebeverbindung am Teil befestigt und mit ihm elektrisch leitend verbunden. Diese elektrisch leitende Klebeverbindung wird dann durch den Umschäumungsprozeß abgekapselt und zusätzlich gesichert.

Beim Schäumen kann das Kontaktelement, vorzugsweise ein Flachbandkabel, mit einem Ende aus der Schaumform herausragen, wobei das Kontaktelement später mit diesem freien Ende z.B. an der Fahrzeugkarosserie befestigt oder zu einem am Modul vorgesehenen Verbraucher geführt und/oder gegebenenfalls zum Kontakt mit der Fahrzeugkarosserie verbunden wird.

Schließlich betrifft die vorliegende Erfindung ein Verfahren zum Befestigen eines erfindungsgemäßen Moduls an einer Fahrzeugkarosserie, insbesondere zum Befestigen eines Dachmoduls mit integriertem Dachöffnungssystem an der Fahrzeugkarosserie, wobei die Kunststoffschicht durch Schäumen hergestellt ist. Erfindungsgemäß ist vorgesehen, daß das Modul nur im Bereich der Kunststoffschicht die Fahrzeugkarosserie kontaktiert und daß durch ein Befestigungsmittel die Kunststoffschicht und über die Kunststoffschicht das gesamte Modul an der Fahrzeugkarosserie befestigt ist, wobei durch dasselbe Befestigungsmittel auch das elektrische Kontaktelement mit der Fahrzeugkarosserie elektrisch leitend verbunden wird.

Vorzugsweise ist dieses Befestigungsmittel eine elektrisch leitende Klebeverbindung, wobei sich der Kleber sowohl über die Kunststoffschicht als auch über das wenigstens partiell freiliegende Kontaktelement erstreckt, um eine gute und sichere Verbindung und einen sicheren elektrischen Kontakt zwischen Kontaktelement und Fahrzeugkarosserie zu gewährleisten.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Perspektivansicht einer Fahrzeugkarosserie samt eingebautem erfindungsgemäßen Modul in Form eines Dachmoduls,
- Figur 2 einen Schnitt längs der Linie II-II durch einen Rand des Dachmoduls und die angrenzende Fahrzeugkarosserie,
- Figur 3 einen Figur 2 entsprechenden Schnitt mit einem Modul gemäß einer zweiten Ausführungsform,
- Figur 4 einen Figur 2 entsprechen den Schnitt mit einem Modul gemäß einer dritten Ausführungsform,
- Figur 5 einen Figur 2 entsprechen den Schnitt mit einem Modul gemäß einer vierten Ausführungsform,
- Figur 6 einen Figur 2 entsprechenden Schnitt mit einem Modul gemäß einer fünften Ausführungsform und
- Figur 7 einen Schnitt durch eine S chäumform zur Herstellung des erfindungsgemäßen Moduls und Durchführung des erfindungsgemäßen Verfahrens.

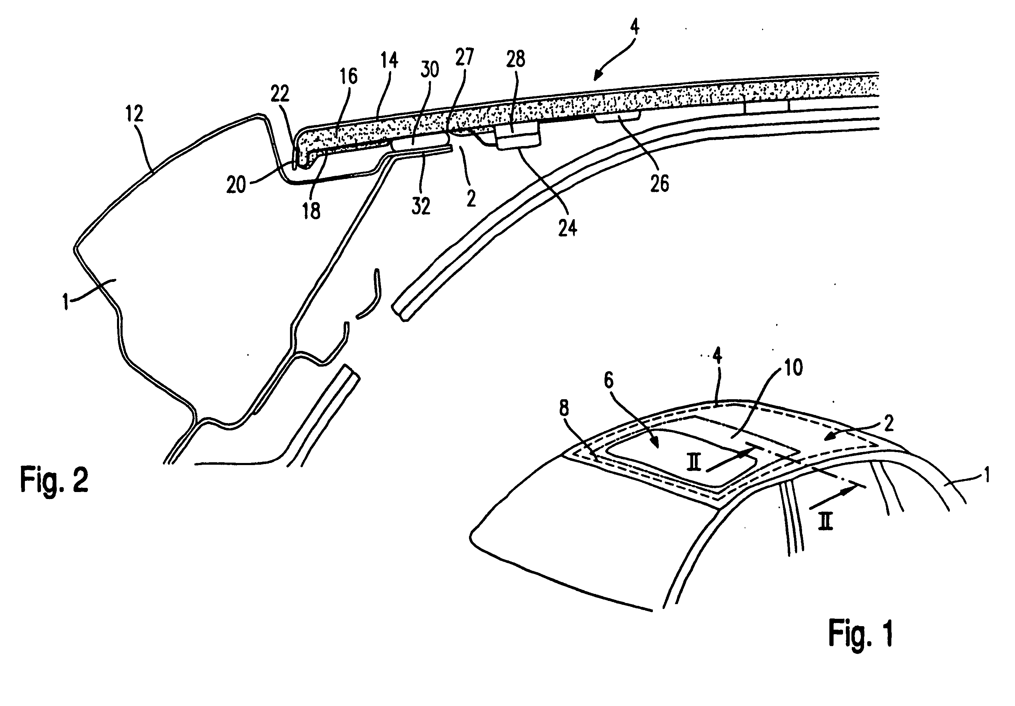

In Figur 1 ist ein Fahrzeugdach dargestellt, welches eine Fahrzeugkarosserie 1 aus Blech aufweist, die eine mit unterbrochenen Linien dargestellte Öffnung 2 in der Außenhaut der Fahrzeugkarosserie 1 aufweist. In diese Öffnung 2 ist ein komplettes Dachmodul 4 zum Schließen der Öffnung 2 eingebaut. In das Dachmodul 4 ist ein Dachöffnungssystem integriert, welches einen verstell- und/oder verfahrbaren Deckel 6 zum Schließen einer Dachmodulöffnung 8 aufweist. Über den geöffneten Deckel 6 kann Frischluft ins Fahrzeug geführt werden. Alternativ hierzu kann die Erfindung auch ein Schiebe- oder Spoiler-, Falt-, Lamellen- oder Glasdachmodul betreffen, das dann nicht die Ausmaße des Dachmoduls 4 hat, sondern nur die mit strichpunktierten Linien angedeuteten Ausmaße einnimmt, wobei die Öffnung 2 entsprechend kleiner ausgeführt ist. Das Schiebe- oder Spoilerdachmodul ist mit dem Bezugszeichen 10 versehen.

In Figur 2 ist die Fahrzeugkarosserie 1 mit ihrer im vollständig montierten Zustand des Fahrzeugs von außen sichtbaren Außenhaut 12 besser zu erkennen. Das Dachmodul 4 umfaßt ein Teil, das aus einem die Außenhaut 12 der Fahrzeugkarosserie 1 im montierten Zustand fortsetzenden und damit Teil der Außenhaut des Fahrzeug abschnittsweise bildenden Blech 14 besteht, sowie eine innenseitig am Blech 14 unmittelbar anschließende und am Blech 14 durch Schäumen oder Spritzen hergestellte Kunststoffschicht 16. Um das Blech 14, d.h. das Teil, elektrisch leitend mit der Fahrzeugkarosserie 1 zu verbinden, ist ein lektrisch leitendes Kontaktelement 18 in Form eines Kabels, vorzugsweise eines Flachbandkabels vorgesehen. Das Flachbandkabel ist in die Kunststoffschicht 16 eingebettet, in dem es partiell allseitig von Kunststoff umgeben ist. Das Kontaktelement 18 wird an einem abgewinkelten Rand 20 des Blechs 14 durch eine elektrisch leitende einkomponentige oder zweikomponentige Klebeverbindung 22 befestigt, wobei die Klebeverbindung auch die elektrische Kontaktierung des Kontaktelements 18 mit dem Blech 14 bewerkstelligt. Von dem freien, am Blech 14 befestigten Ende des Kontaktelements 18 verläuft dieses zuerst wellenförmig durch die Kunststoffschicht 16, um möglichst nahe am freien, am Rand 20 befestigten Ende eine Zugentlastung zu erreichen. Das Kontaktelement 18 ist mechanisch nicht lasttragend, weil flexibel, ausgebildet und nicht mechanisch lasttragend im Dachmodul 4 integriert, d.h. es dient ausschließlich der elektrischen Kontaktierung.

An einem nicht am Blech 14 befestigten freien Ende des Kontaktelements 18 ist ein elektrischer Steckkontakt 24 befestigt, der einen Stromkreis eines am Dachmodul 4 vorgesehenen elektrischen Verbrauchers, z. B. einer Innenraumbeleuchtung 26 schließt. Mit 28 ist ein Gegenstecker für den Steckkontakt 24 bezeichnet.

Zwischen den beiden freien Enden des Kontaktelements 18 verläuft dieses über einen kurzen Abschnitt 27 auf der Außenseite der Kunststoffschicht 16. In diesem Abschnitt 27 liegt das Kontaktelement 18 frei. Wenn ein isoliertes Flachbandkabel verwendet wird, ist dieses in diesem Abschnitt 27 auch abisoliert.

Das Dachmodul 4 ist durch eine ringförmig, möglichst geschlossen umlaufende Klebeverbindung 30 an der Fahrzeugkarosserie 1, genauer gesagt am die Öffnung 2 begrenzenden Blechrand 32 der Fahrzeugkarosserie 1, befestigt. Die dargestellte Kleberaupe verläuft auch über den freiliegenden Abschnitt des Kontaktelements 18. Da die Klebeverbindung 30 ebenfalls eine elektrisch leitende einkomponentige oder zweikomponentige Klebeverbindung ist, sorgt sie auch für eine elektrisch leitende Verbindung von Kontaktelement 18 und Fahrzeugkarosserie 1. Die Klebeverbindung 30 stellt damit ein Befestigungsmittel zur Befestigung des Dachmoduls 4 an der Fahrzeugkarosserie 1 dar, welches eine Doppelfunktion hat, indem es zugleich auch das Kontaktelement 18 elektrisch leitend an der Fahrzeugkarosserie unmittelbar befestigt.

Bei der in Figur 2 dargestellten Ausführungsform ist das Blech 14 zugleich ein tragender Rahmen für den Deckel 6, der in Figur 2 nicht zu sehen ist.

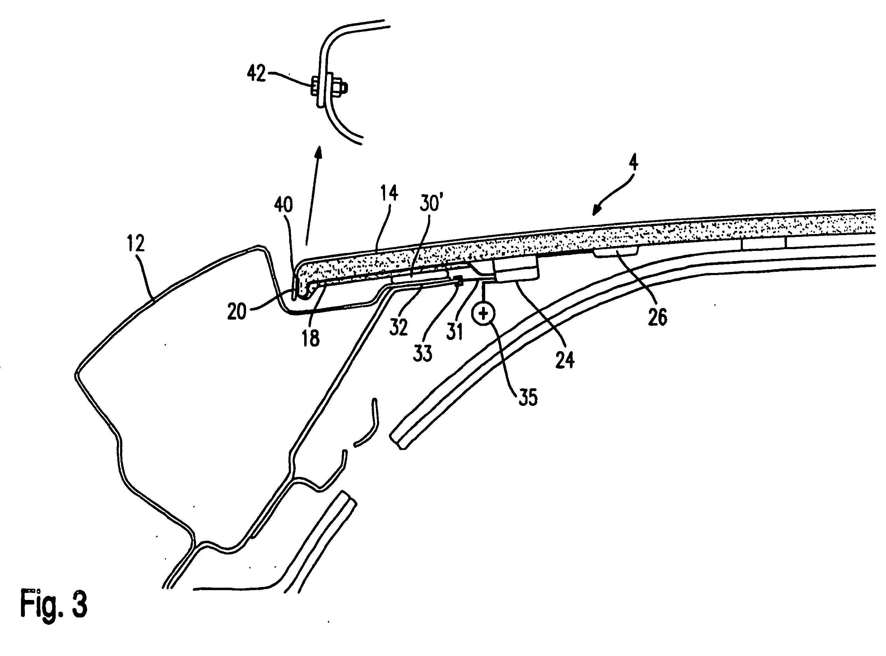

Die Ausführungsform nach Figur 3 entspricht im wesentlichen der in Figur 2 gezeigten, mit dem Unterschied, daß das elektrische Kontaktelement 18 durch eine Schweiß- oder Lötverbindung 40, durch eine Niet- oder eine Schraubverbindung 42, wie in dem in Figur 3 gezeigten alternativen Ausschnitt dargestellt, oder durch Crimpen, Clinchen oder Klemmen mit dem Rand 20 oder (nicht gezeigt) mit dem Rand 32 verbunden ist.

Die Klebeverbindung 30' ist bei dieser Ausführungsform nicht elektrisch leitend ausgeführt. Zur Kontaktierung der Fahrzeugkarosserie 1 hat der Stecker 24 ein separates Kabel 31 oder eine Ader des Flachbandkabels mit einem Steckkontaktende 33, das auf den Rand 32 aufgesteckt und geklemmt wird. Das Kabel 31 ist mit dem zum Rand 20 geführten Kabel oder dieser Ader innerhalb des Steckers 24 verbunden. Vom Stecker 24 geht auch noch ein zu einer Stromquelle 35 führendes Kabel aus. Durch diese Ausführungsform wird der Verbraucher 26 sowohl mit der Masse als auch mit einer Stromquelle verbunden, und zugleich wird die Massekontaktierung des Teils 14 erreicht.

Alternativ zur Klebeverbindung 30' kann auch eine andere Art der Verbindung vorgesehen sein. Bei den folgenden Ausführungsformen ist ebenfalls der Steckkontakt 24 gezeigt, zur Vereinfachung ist aber die Stromquelle 35 nicht mehr dargestellt.

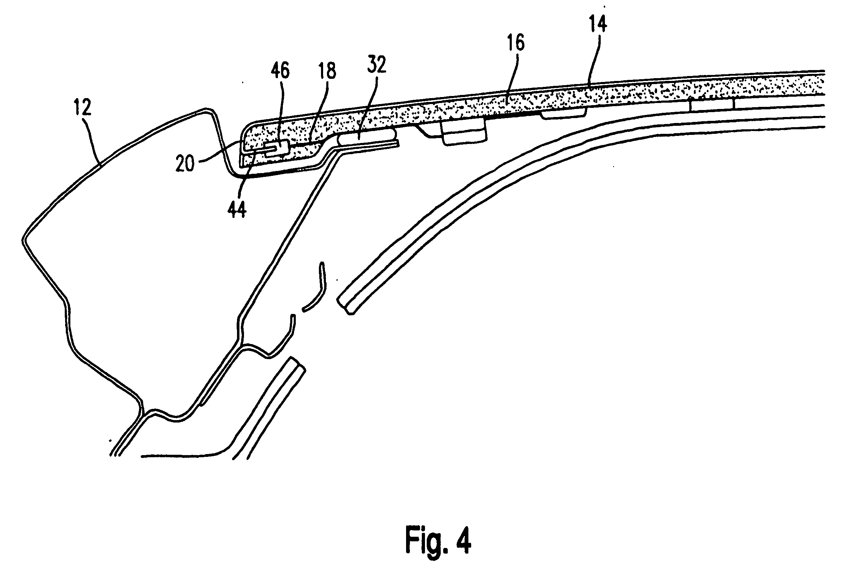

Bei der Ausführungsform nach Figur 4 steht vom Rand 20 innenseitig, in den Kunststoff ragend, eine Blechlasche 44 ab, auf die ein am freien Ende des Kontaktelements 18 angebrachter Steckkontakt 46 aufgeschoben wird, bevor das Blech 14 hinterschäumt oder hinterspritzt wird.

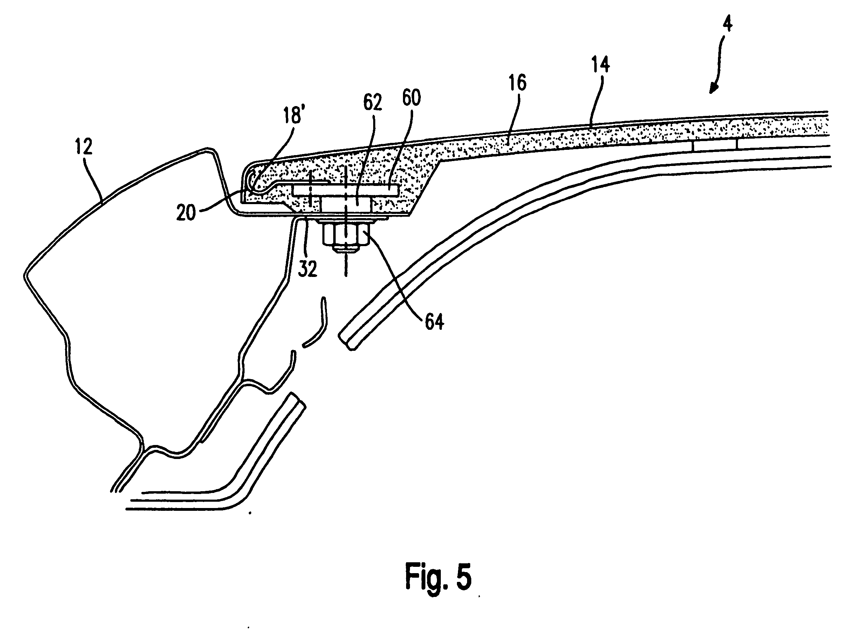

Bei der Ausführungsform nach Figur 5 ist das Kontaktelement 18' mehrteilig ausgeführt und hat eine in die Kunststoffschicht 16 eingebettete Kontaktfeder mit einem halbkreisförmig gebogenen freien Ende. Mit diesem gebogenen freien Ende drückt die Kontaktfeder geringfügig gegen die Innenseite des Randes 20 des Blechs 14, um einen elektrischen Kontakt zu gewährleisten. Das Kontaktelement 18' ist an einem Halteblech 60 angeschraubt oder mit ihm auf sonstige Art verbunden, selbstverständlich unter Bereitstellen eines elektrischen Kontaktes. An der Unterseite des Halteblechs 60 ist ein Schraubbolzen 62 befestigt, der durch eine Öffnung im Rand 32 ragt. Mittels einer Mutter 64 wird dann das vollständig in die Kunststoffschicht 16 eingebettete Halteblech 60 und damit das gesamte Modul 4 an der Fahrzeugkarosserie 1 befestigt. Bei der Ausführungsform nach Figur 5 besteht das Kontaktelement 18' nicht nur aus der Kontaktfeder, sondern auch noch aus dem Halteblech 60 und dem Schraubbolzen 62, der mit einem Absatz ausgebildet ist, welcher an der Außenseite der Kunststoffschicht 16 endet. Der Schraubbolzen 62 ist im vorliegenden Fall der Abschnitt des Kontaktelements, der bezüglich der Kunststoffschicht 16 freiliegt. Das Kontaktelement umfaßt also vorliegend neben der Kontaktfeder und dem Halteblech 60 eine Schrauben-Muttern-Verbindung. Selbstverständlich sind zahlreiche Befestigungsmittel (Schrauben-Muttern-Verbindungen) über den Rand des Moduls verteilt angeordnet. Das gezeigte Befestigungsmittel dient wie bei den anderen Ausführungsformen der Arretierung des Moduls 4 und der Bereitstellung eines elektrischen Kontaktes zwischen dem Blech 14 und der Fahrzeugkarosserie 1.

Anstatt der Schrauben-Muttern-Verbindung könnte gegebenenfalls auch eine Klemm- oder Rastverbindung eingesetzt werden, solange auch der elektrische Kontakt durch diese Verbindung sichergestellt ist.

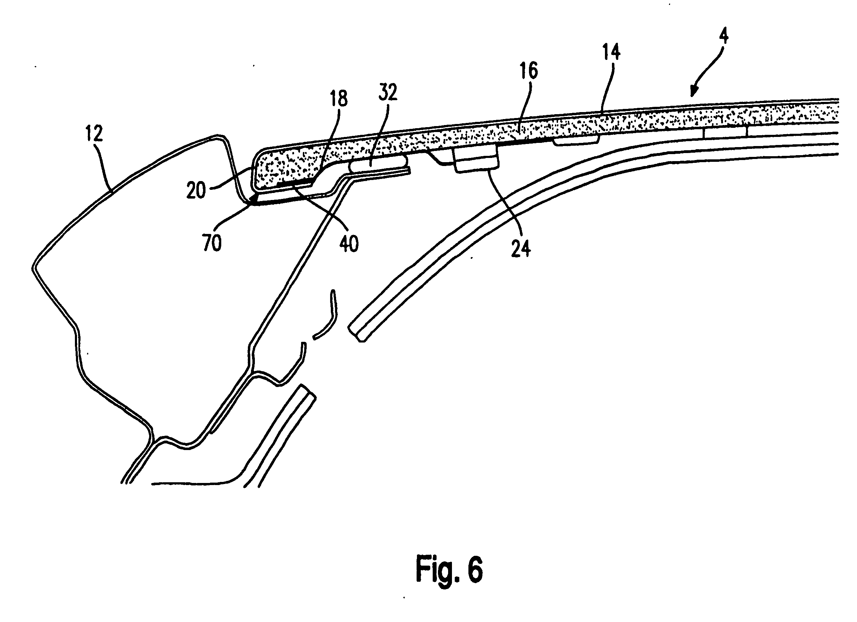

Bei der Ausführungsform nach Figur 6 steht vom Rand 20 nach innen eine schmale Lasche 70 vor, die etwas breiter als das Kontaktelement 18 ist. Das Kontaktelement 18 ist mit seinem freien Ende an der Lasche 70 durch eine elektrisch leitende Klebeverbindung 40 befestigt. Bei dieser Ausführungsform verläuft das Kontaktelement 18 nicht abschnittsweise in der Kunststoffschicht 16, d.h. es ist nicht allseitig von Kunststoff umgeben, vielmehr liegt es an der Außenseite der Kunststoffschicht 16 frei. Die Kunststoffschicht 16 bildet sozusagen eine U-förmige, der Form des Kontaktelements 18 angepaßte Ausnehmung, in der das Kontaktelement 18 eingebettet liegt.

Bei jeder der gezeigten Ausführungsformen des erfindungsgemäßen Moduls wird die Kunststoffschicht 16 vorzugsweise durch Schäumen hergestellt. Bei allen Ausführungsformen berührt das Blech 14 die Fahrzeugkarosserie 1 nicht unmittelbar, vielmehr liegt das Modul über seine Kunststoffschicht 16 an der Fahrzeugkarosserie 1 an. Nur durch Zwischenschaltung des Kontaktelements 18, 18' wird der Kontakt zwischen dem Blech 14 und der Fahrzeugkarosserie 1 erreicht. Wie bei Ausführungsformen nach den Figuren 2, und 4 bis 6 gezeigt, wird das Modul 4 durch dasjenige Befestigungsmittel an der Fahrzeugkarosserie 1 befestigt, das auch das elektrische Kontaktelement mit der Fahrzeugkarosserie 1 elektrisch leitend verbindet.

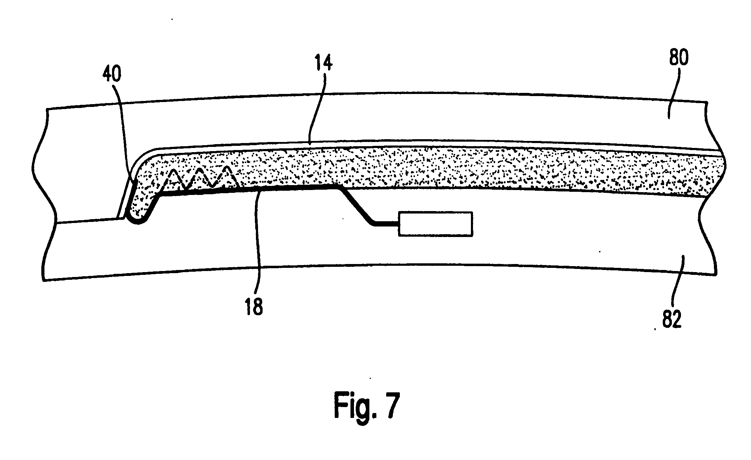

In Figur 7 ist die aus zwei Hälften 80, 82 bestehende Schäumform dargestellt, die zur Herstellung des Moduls 4 dient. Vor dem Einlegen des Blechs 14 in die Schäumformhälfte 80 wird über die Klebeverbindung 40 das Kontaktelement 18 am Blech 14 befestigt. Anschließend wird das Teil, nämlich das Blech 14, in die Schäumform eingelegt. Auch das Kontaktelement 18 wird mit in die Schäumform eingelegt und relativ zum Blech 14 positioniert, z.B. indem das Kontaktelement 18 unmittelbar auf der Schäumformhälfte 82 anliegt oder indem entsprechende Halteelemente, z. B. Schieber, in einer Schäumformhälfte 80, 82 vorgesehen sind. Das Kontaktelement 18 erstreckt sich mit einem Ende aus der Schäumform heraus, indem es zwischen flexiblen Kunststoffdichtungen am Rand der Schäumformhälften 80, 82 durchgeführt und zwischen den Dichtungen geklemmt und dadurch positioniert wird. Anschließend wird das Blech 14 so hinterschäumt, daß das Kontaktelement 18 in die entstehende Kunststoffschicht 16 eingebettet ist.

Zur Zugentlastung kann das vorzugsweise flexibel ausgebildete elektrische Kontaktelement 18 wellenförmig oder, wie in Figur 7 mit unterbrochenen Linien gezeigt, auch zick-zack-förmig in der Kunststoffschicht 16 verlaufen.

## Patentansprüche

1. Modul zum Anbau an eine Fahrzeugkarosserie (1) und zum Schließen der Außenhaut (12) der Fahrzeugkarosserie (1), mit
wenigstens einem Metallteil, das im eingebauten Zustand des Moduls die Außenhaut (12) der Fahrzeugkarosserie (1) wenigstens abschnittsweise bildet, und
einer mit dem Teil verbundenen elektrisch isolierenden Kunststoffschicht (16), mit der das Modul an der Fahrzeugkarosserie (1) anliegt,
**dadurch gekennzeichnet, daß**
ein elektrisch leitendes Kontaktelement (18) mit dem Teil elektrisch leitend verbunden und in die Kunststoffschicht (16) eingebettet und an ihr befestigt ist,
daß das Kontaktelement (18) einen bezüglich der Kunststoffschicht (16) freiliegenden Abschnitt (27) hat, der der elektrischen Kontaktierung der Fahrzeugkarosserie (1) dient.

2. Modul nach Anspruch 1, **dadurch gekennzeichnet, daß** das Teil ein eine Öffnung (2) in der Außenhaut (12) der Fahrzeugkarosserie (1) schließendes Blech ist.

3. Modul nach Anspruch 1, **dadurch gekennzeichnet, daß** das Teil ein tragender Rahmen des Moduls ist.

4. Modul nach einem der vorhergehenden Ansprüche, **dadurch gekennzeichnet, daß** es ein Dachmodul (4) mit integriertem Dachöffnungssystem ist.

5. Modul nach Anspruch 4, **dadurch gekennzeichnet, daß** es ein Schiebe- oder Spoilerdachmodul ist.

6. Modul nach einem der vorhergehenden Ansprüche, **dadurch gekennzeichnet, daß** das Kontaktelement (18) mechanisch nicht lasttragend ausgebildet und/oder nicht mechanisch lasttragend im Modul integriert ist.

7. Modul nach einem der vorhergehenden Ansprüche, **dadurch gekennzeichnet, daß** das Kontaktelement (18) durch
eine elektrisch leitende Klebeverbindung (20),
Schweißen (40),
Löten (40),
Nieten (42),
Crimpen,
Clinchen,
einen elektrischen Steckkontakt (46),
Schrauben (42) oder Klemmen mit dem Teil oder der Fahrzeugkarosserie (1) elektrisch leitend verbunden ist.

8. Modul nach einem der vorhergehenden Ansprüche, **dadurch gekennzeichnet, daß** ein Befestigungsmittel zur Befestigung des Moduls an der Fahrzeugkarosserie (1) vorgesehen ist, wobei das Befestigungsmittel
eine Klebeverbindung (30),
eine Nietverbindung,
eine Crimpverbindung,
eine Clinchverbindung,
eine Steckverbindung,
eine Schraub- oder Klemmverbindung ist.

9. Modul nach Anspruch 8, **dadurch gekennzeichnet, daß** das Befestigungsmittel zur Befestigung des Moduls an der Fahrzeugkarosserie (1) auch das Kontaktelement (18) elektrisch leitend an der Fahrzeugkarosserie (1) befestigt.

10. Modul nach Anspruch 9, **dadurch gekennzeichnet, daß** eine elektrisch leitende Klebeverbindung zur unmittelbaren Befestigung des Kontaktelements (18) an der Fahrzeugkarosserie (1) und des Moduls an der Fahrzeugkarosserie (1) vorgesehen ist.

11. Modul nach einem der vorhergehenden Ansprüche, **dadurch gekennzeichnet, daß** das Teil auf seiner Unterseite hinterschäumt ist, um die Kunststoffschicht (16) zu bilden.

12. Modul nach einem der vorhergehenden Ansprüche, **dadurch gekennzeichnet, daß** das Kontaktelement (18) ein Kabel, insbesondere ein Flachbandkabel ist.

13. Modul nach Anspruch 12, **dadurch gekennzeichnet, daß** das Flachbandkabel in die Kunststoffschicht (16) eingebettet ist.

14. Modul nach Anspruch 12 oder 13, **dadurch gekennzeichnet, daß** das Flachbandkabel auf der Außenseite der Kunststoffschicht (16), an der es befestigt ist, freiliegt.

15. Modul nach einem der Ansprüche 12 bis 14, **dadurch gekennzeichnet, daß** das Flachbandkabel an einem Ende mit einem Stecker (24) verbunden ist, wobei der Stecker zum Anschluß eines am Modul vorgesehenen elektrischen Verbrauchers vorgesehen ist.

16. Modul nach Anspruch 15, **dadurch gekennzeichnet, daß** vom Stecker (24) ein Kabel oder Adern des Flachbandkabels ausgehen, die zu einer Stromquelle führen.

17. Modul nach einem der Ansprüche 12 bis 16, **dadurch gekennzeichnet, daß** das Flachbandkabel wellen- oder zick-zack-förmig in die Kunststoffschicht (16) eingebettet ist.

18. Modul nach einem der Ansprüche 1 bis 11, **dadurch gekennzeichnet, daß** das Kontaktelement (18') eine Schrauben-Muttern-Verbindung aufweist und die Schraube oder Mutter der Schrauben-Muttern-Verbindung in die Kunststoffschicht (16) durch Umschäumen eingebettet ist, wobei die Schrauben-Muttern-Verbindung der Befestigung des Moduls an der Fahrzeugkarosserie (1) dient.

19. Modul nach Anspruch 18, **dadurch gekennzeichnet, daß** das elektrische Kontaktelement (18') eine an dem Teil anliegende, in die Kunststoffschicht (16) durch Umschäumen eingebettete Kontaktfeder umfaßt.

20. Verfahren zum Herstellen eines Moduls nach einem der vorhergehenden Ansprüche, insbesondere eines Dachmoduls mit integriertem Dachöffnungssystem für ein Fahrzeug,
**gekennzeichnet durch** folgende Schritte:
a) das Teil wird in eine Schäumform eingelegt,
b) das Kontaktelement (18) wird in die Schäumform eingelegt und relativ zum Teil positioniert und
c) das Teil wird so hinterschäumt, daß das Kontaktelement (18) in die entstehende Kunststoffschicht (16) eingebettet ist, wobei das Kontaktelement (18) im hinterschäumten Zustand das Teil kontaktiert.

21. Verfahren nach Anspruch 20, **dadurch gekennzeichnet, daß** das Kontaktelement (18) vor Schritt c) durch eine elektrisch leitende Klebeverbindung (22) am Teil befestigt und mit ihm elektrisch leitend verbunden ist.

22. Verfahren nach Anspruch 20 oder 21, **dadurch gekennzeichnet, daß** das Kontaktelement (18) ein Flachbandkabel ist, welches beim Schäumen mit einem Ende aus der Schaumform herausragt.

23. Verfahren zum Befestigen eines Moduls nach einem der vorhergehenden Ansprüche an einer Fahrzeugkarosserie (1), insbesondere zum Befestigen eines Dachmoduls mit integriertem Dachöffnungssystem an der Fahrzeugkarosserie (1), wobei die Kunststoffschicht (16) durch Schäumen hergestellt ist,
**dadurch gekennzeichnet, daß**
das Modul nur im Bereich der Kunststoffschicht (16) die Fahrzeugkarosserie (1) kontaktiert und daß durch ein Befestigungsmittel die Kunststoffschicht (16) an der Fahrzeugkarosserie (1) und über die Kunststoffschicht (16) das gesamte Modul an der Fahrzeugkarosserie (1) befestigt ist, wobei durch dasselbe Befestigungsmittel auch das elektrische Kontaktelement (18) mit der Fahrzeugkarosserie (1) elektrisch leitend verbunden wird.

24. Verfahren nach Anspruch 23, **dadurch gekennzeichnet, daß** als Befestigungsmittel eine elektrisch leitende Klebeverbindung (30) verwendet wird und der Kleber sich sowohl über die Kunststoffschicht (16) als auch über das wenigstens abschnittsweise freiliegende Kontaktelement (18) erstreckt.

## Claims

1. A module for mounting on a vehicle body (1) and closing the outer skin (12) of the vehicle body (1), comprising
at least one metal part that, in the installed state of the module, forms at least a portion of the outer skin (12) of the vehicle body (1), and
an electrically insulating plastic layer (16) which is connected with the part and with which the module rests at the vehicle body (1),
**characterized in that**
an electrically conductive contact element (18) is connected with the part in an electrically conductive manner and is embedded in the plastic layer (16) and fastened to it,
the contact element has a section (27) which is exposed with regard to the plastic layer (16), the section providing the electrical contact with the vehicle body (1).

2. The module according to claim 1, **characterized in that** the part is a sheet of metal that closes an opening (2) in the outer skin (12) of the vehicle body (1).

3. The module according to claim 1, **characterized in that** the part is a supporting frame of the module.

4. The module according to any of the preceding claims, **characterized in that** it is a roof module (4) including an integrated roof opening system.

5. The module according to claim 4, **characterized in that** it is a sliding roof module or a spoiler roof module.

6. The module according to any of the preceding claims, **characterized in that** the contact element (18) is configured so as to be mechanically not load-carrying and/or is integrated in the module so as to be mechanically not load-carrying.

7. The module according to any of the preceding claims, **characterized in that** the contact element (18) is connected with the part or the vehicle body (1) by
an electrically conductive glued connection (20),
welding (40),
brazing (40),
riveting (42),
crimping,
clinching,
an electrical plug-in contact (46),
screwing (42) or clamping.

8. The module according to any of the preceding claims, **characterized in that** a fastening means is provided for fastening the module to the vehicle body (1), the fastening means being
a glued connection (30),
a riveted connection,
a crimped connection,
a clinched connection,
a plug-in connection,
a screwed connection or a clamped connection.

9. The module according to claim 8, **characterized in that** the fastening means for fastening the module to the vehicle body (1) also fastens the contact element (18) to the vehicle body (1) in an electrically conductive manner.

10. The module according to claim 9, **characterized in that** an electrically conductive glued connection for a direct fastening of the contact element (18) to the vehicle body (1) and of the module to the vehicle body (1) is provided.

11. The module according to any of the preceding claims, **characterized in that** the part is provided with a foamed backing on its underside in order to form the plastic layer (16).

12. The module according to any of the preceding claims, **characterized in that** the contact element (18) is a cable, in particular a flat cable.

13. The module according to claim 12, **characterized in that** the flat cable is embedded in the plastic layer (16).

14. The module according to claim 12 or 13, **characterized in that** the flat cable is exposed on the outer side of the plastic layer (16), where it is fastened to the plastic layer.

15. The module according to any of the claims 12 to 14, **characterized in that** the flat cable is connected at one end with a plug (24), the plug being provided for electrically connecting an electrical consumer provided on the module.

16. The module according to claim 15, **characterized in that** conductors or wires of the flat cable lead away from the plug (24) and are guided to a power source.

17. The module according to any of the claims 12 to 16, **characterized in that** the flat cable is embedded in the plastic layer (16) in an undulated or zigzag-like manner.

18. The module according to any of the claims 1 to 11, **characterized in that** the contact element (18') comprises a nut-and-bolt connection and the nut or the bolt of the nut-and-bolt connection is embedded in the plastic layer (16) by means of foaming, the nut-and-bolt connection serving for fastening the module to the vehicle body (1).

19. The module according to claim 18, **characterized in that** the electrical contact element (18') comprises a contact spring resting at the part and embedded in the plastic layer (16) by means of foaming.

20. A method of producing a module according to any of the preceding claims, in particular a roof module including an integrated roof opening system for a motor vehicle,
**characterized by** the following steps:
a) the part is placed in a foaming mold;
b) the contact element (18) is placed in the foaming mold and is positioned relative to the part and
c) the part is provided with a foamed backing in such a way that the contact element (18) is embedded in the resultant plastic layer (16), the contact element (18) contacting the part in a state when the foamed backing is complete.

21. The method according to claim 20, **characterized in that** prior to step c) the contact element (18) is fastened to the part and electrically connected therewith by means of an electrically conductive glued connection (22).

22. The method according to claim 20 or 21, **characterized in that** the contact element (18) is a flat cable which has an end projecting out of the foaming mold during foaming.

23. A method of fastening a module according to any of the preceding claims to a vehicle body (1), in particular for fastening a roof module including an integrated roof opening system to the vehicle body (1), the plastic layer (16) being produced by means of foaming,
**characterized in that**
the module contacts the vehicle body (1) only in the region of the plastic layer (16) and that via a fastening means the plastic layer (16) is fastened to the vehicle body (1) and via the plastic layer (16) the entire module is fastened to the vehicle body (1), the electrical contact element (18) also being connected in an electrically conductive manner to the vehicle body (1) by the same fastening means.

24. The method according to claim 23, **characterized in that** an electrically conductive glued connection (30) is used as the fastening means and the gluing agent extends both across the plastic layer (16) and the contact element (18) which is exposed at least in part.

## Revendications

1. Module destiné à être rapporté sur une carrosserie de véhicule (1) et à fermer le revêtement extérieur (12) de la carrosserie de véhicule (1), comportant
au moins une pièce métallique qui, à l'état de montage du module, forme au moins par tronçons le revêtement extérieure (12) de la carrosserie de véhicule (1), et
une couche de matière plastique (16) électriquement isolante reliée à la pièce et par laquelle le module est en appui sur la carrosserie de véhicule (1),
**caractérisé en ce que**
un élément de contact (18) électroconducteur est connecté de manière électroconductrice avec la pièce et noyé dans la couche de matière plastique (16) et fixée à celle-ci,
**en ce que** l'élément de contact (18) a un tronçon (27) mis à découvert par rapport à la couche de matière plastique (16), qui sert à la mise en contact électrique de la carrosserie de véhicule (1).

2. Module selon la revendication 1, **caractérisé en ce que** la pièce est une tôle fermant une ouverture (2) dans le revêtement extérieur (12) de la carrosserie de véhicule (1).

3. Module selon la revendication 1, **caractérisé en ce que** la pièce est un cadre porteur du module.

4. Module selon l'une des revendications précédentes, **caractérisé en ce qu'**il s'agit d'un module de toit (4) avec système d'ouverture de toit intégré.

5. Module selon la revendication 4, **caractérisé en ce qu'**il s'agit d'un module de toit coulissant ou de toit à becquet.

6. Module selon l'une des revendications précédentes, **caractérisé en ce que** l'élément de contact (18) est réalisé de manière à ne pas porter de charge mécaniquement et/ou est intégré au module de manière à ne pas porter de charge mécaniquement.

7. Module selon l'une des revendications précédentes, **caractérisé en ce que** l'élément de contact (18) est connecté de manière électroconductrice à la pièce ou à la carrosserie du véhicule par
soudure (40),
brasage (40),
rivetage (42),
sertissage,
clinchage,
un contact d'enfichage électrique (46),
vissage (42) ou serrage avec la pièce ou la carrosserie de véhicule (1).

8. Module selon l'une des revendications précédentes, **caractérisé en ce qu'**il est prévu un moyen de fixation pour fixer le module sur la carrosserie de véhicule (1), le moyen de fixation étant
une liaison par collage (30),
une liaison par rivetage,
une liaison par sertissage,
une liaison par clinchage,
une liaison par enfichage,
une liaison par vissage ou par serrage.

9. Module selon la revendication 8, **caractérisé en ce que** le moyen de fixation pour fixer le module sur la carrosserie de véhicule (1) fixe aussi l'élément de contact (18) de manière électroconductrice sur la carrosserie de véhicule (1).

10. Module selon la revendication 9, **caractérisé en ce qu'**il est prévu une liaison par collage électroconductrice pour fixer directement l'élément de contact (18) sur la carrosserie de véhicule (1) et le module sur la carrosserie de véhicule (1).

11. Module selon l'une des revendications précédentes, **caractérisé en ce que** sur sa face inférieure, la pièce est recouverte d'une mousse par l'arrière pour former la couche de matière plastique (16).

12. Module selon l'une des revendications précédentes, **caractérisé en ce que** l'élément de contact (18) est un câble, en particulier un câble plat.

13. Module selon la revendication 12, **caractérisé en ce que** le câble plat est noyé dans la couche de matière plastique (16).

14. Module selon la revendication 12 ou 13, **caractérisé en ce que** le câble plat est mis à découvert sur la face extérieure de la couche de matière plastique (16) sur laquelle il est fixé.

15. Module selon l'une des revendications 12 à 14, **caractérisé en ce que** le câble plat est relié par une extrémité à une fiche (24), la fiche étant prévue pour connecter un consommateur électrique prévu sur le module.

16. Module selon la revendication 15, **caractérisé en ce que** depuis la fiche (24) part un câble ou des âmes d'un câble plat qui mènent à une source de courant.

17. Module selon l'une des revendications 12 à 16, **caractérisé en ce que** le câble plat est noyé dans la couche de matière plastique (16) sous forme d'ondes ou de zigzag.

18. Module selon l'une des revendications 1 à 11, **caractérisé en ce que** l'élément de contact (18') présente une liaison à vis et écrou et la vis ou l'écrou de la liaison à vis et écrou est noyée dans la couche de matière plastique (16) par moussage, la liaison à vis et écrou servant à fixer le module sur la carrosserie de véhicule (1).

19. Module selon la revendication 18, **caractérisé en ce que** l'élément de contact électrique (18') comprend un ressort de contact en appui sur la pièce et noyé par moussage dans la couche de matière plastique (16).

20. Procédé de fabrication d'un module selon l'une des revendications précédentes, en particulier d'un module de toit avec système d'ouverture de toit intégré pour un véhicule,
**caractérisé par** les étapes suivantes :
a) la pièce est insérée dans un moule de moussage,
b) l'élément de contact (18) est inséré dans le moule de moussage et positionné par rapport à la pièce, et
c) la pièce est moussée par l'arrière de telle sorte que l'élément de contact (18) est noyé dans la couche de matière plastique (16) en formation, l'élément de contact (18) contactant la pièce à l'état moussé par l'arrière.

21. Procédé selon la revendication 20, **caractérisé en ce que** l'élément de contact (18) est fixée à la pièce par une liaison par collage (22) électroconductrice avant l'étape c) et est reliée à celle-ci de manière électroconductrice.

22. Procédé selon la revendication 20 ou 21, **caractérisé en ce que** l'élément de contact (18) est un câble plat qui, lors du moussage, fait saillie par une extrémité hors du moule de moussage.

23. Procédé de fixation d'un module selon l'une des revendications précédentes, sur une carrosserie de véhicule (1), en particulier pour fixer sur la carrosserie de véhicule (1) un module de toit avec système d'ouverture de toit intégré, la couche de matière plastique (16) étant réalisée par moussage,
**caractérisé en ce que**
le module ne vient en contact avec la carrosserie de véhicule (1) que dans la région de la couche de matière plastique (16) et **en ce que** la couche de matière plastique (16) est fixée sur la carrosserie de véhicule (1) par un moyen de fixation et le module tout entier est fixé via la couche de matière plastique (16) sur la carrosserie de véhicule (1), l'élément de contact (18) électrique étant aussi relié de manière électroconductrice à la carrosserie de véhicule (1) par le même moyen de fixation.

24. Procédé selon la revendication 23, **caractérisé en ce qu'**on utilise à titre de moyen de fixation une liaison par collage (30) électroconductrice, et **en ce que** la colle s'étend tant sur la couche de matière plastique (16) que sur l'élément de contact (18) mis à découvert au moins par tronçons.
